# EUROPEAN PATENT APPLICATION

(11) **EP 3 822 818 A1**
(43) Date of publication of application: **19.05.2021**
(21) Application number: 21165609.5
(22) Date of filing: 29.03.2021
(51) Int. Cl.: G06F 16/332

(54) **METHOD, APPARATUS, DEVICE AND STORAGE MEDIUM FOR INTELLIGENT RESPONSE**

(30) Priority: 15.05.2020 CN 202010414320
(71) Applicant: Beijing Baidu Netcom Science and Technology Co., Ltd., Beijing 100085 (CN)
(72) Inventor: ZHAO, Xiaojun, Beijing 100085 (CN); HE, Xie, Beijing 100085 (CN); LUO, Xuefeng, Beijing 100085 (CN); FAN, Lianghuang, Beijing 100085 (CN); BAI, Changfu, Beijing 100085 (CN)
(74) Representative: Gill Jennings & Every LLP

(57) **Abstract**

The present disclosure provides a method, apparatus, device and storage medium for intelligent response, and relates to the fields of artificial intelligence and cloud computing. A specific implementation solution is: acquiring a current to-be-responded sentence, and determining a current to-be-collected entity corresponding to an intention of the current to-be-responded sentence; acquiring, if a pre-set entity clarification condition is met according to the current to-be-responded sentence, an entity clarification sentence corresponding to the current to-be-collected entity, where the entity clarification sentence is used to clarify an entity value of the current to-be-collected entity; and outputting the entity clarification sentence as a reply sentence of the current to-be-responded sentence. By clarifying and replying the current to-be-responded sentence, the automatic reply to the user request is realized, and the efficiency and accuracy of intelligent response are improved.

## Description

### TECHNICAL FIELD

Embodiments of the present disclosure relate to computer technology, in particular, to the fields of artificial intelligence and cloud computing, and more in particular, to a method, apparatus, device and storage medium for intelligent response.

### BACKGROUND

With the development of the natural language technology, the multi-round dialogue technology is increasingly used in scenarios, such as intelligent customer service and intelligent outbound calls, so that the cost of enterprises is greatly reduced, while the service efficiency is improved.

At present, most multi-round dialogue systems have a relatively single dialogue capability, and basically perform dialogue interaction according to pre-set flows. However, the expressions of users are very free. If entities cannot be uniquely determined according to the contents expressed by the users, the response systems can only repeat the last round of reply, or the systems do not understand, which causes the understanding of user input sentences to be incorrect, so that the efficiency of intelligent response is low and the user experiences are poor.

### SUMMARY

Embodiments of the present disclosure provide a method, apparatus, device and storage medium for intelligent response to improve efficiency and accuracy of intelligent response.

According to a first aspect, a method for intelligent response is provided, and the method includes:
acquiring a current to-be-responded sentence, and determining a current to-be-collected entity corresponding to an intention of the current to-be-responded sentence;
acquiring, if a pre-set entity clarification condition is met according to the current to-be-responded sentence, an entity clarification sentence corresponding to the current to-be-collected entity, where the entity clarification sentence is used to clarify an entity value of the current to-be-collected entity; and
outputting the entity clarification sentence as a reply sentence of the current to-be-responded sentence.

According to a second aspect, an apparatus for intelligent response is provided, and the apparatus includes:
an entity determining module, configured to acquire a current to-be-responded sentence, and determine a current to-be-collected entity corresponding to an intention of the current to-be-responded sentence;
a clarification sentence acquisition module, configured to acquire, if a pre-set entity clarification condition is met according to the current to-be-responded sentence, an entity clarification sentence corresponding to the current to-be-collected entity, where the entity clarification sentence is used to clarify an entity value of the current to-be-collected entity; and
a clarification sentence output module, configured to output the entity clarification sentence as a reply sentence of the current to-be-responded sentence.

According to a third aspect, an electronic device is provided, and the device includes:
at least one processor; and
a memory in communication with the at least one processor, where the memory stores instructions executable by the at least one processor, the instructions, when executed by the at least one processor, cause the at least one processor to execute the method for intelligent response according to any one of the embodiments of the present disclosure.

According to a fourth aspect, a non-transitory computer readable storage medium storing computer instructions, where the computer instructions cause a computer to execute the method for intelligent response according to any one of the embodiments of the present disclosure.

According to a fifth aspect of the present disclosure, a computer program is provided, and the computer program, when executed by a computer, causes the computer to implement the method according to any one of the embodiments of the present disclosure.

According to the techniques of the present disclosure, the problem of the single dialogue capability of intelligent response in the existing technology is solved, the correct understanding of user expressions is realized, and the efficiency and accuracy of intelligent response are improved, and user experiences are improved.

It should be appreciated that the content described in this section is not intended to identify the key or critical features of the embodiments of the present disclosure, nor is it intended to limit the scope of the present disclosure. The other features of the present disclosure will become easy to understand through the following description.

### BRIEF DESCRIPTION OF THE DRAWINGS

The accompanying drawings are intended to provide a better understanding of the present disclosure and do not constitute a limitation to the present disclosure.
Fig. 1 is a schematic flow diagram of a method for intelligent response according to an embodiment of the present disclosure;
Fig. 2 a schematic flow diagram of the method for intelligent response according to an embodiment of the present disclosure;
Fig. 3 is a schematic flow diagram of the method for intelligent response according to an embodiment of the present disclosure;
Fig. 4 is a schematic flow diagram of the method for intelligent response according to an embodiment of the present disclosure;
Fig. 5a is a schematic diagram of a multi-hierarchy location attribute entity according to an embodiment of the present disclosure;
Fig. 5b is a schematic diagram of the multi-hierarchy location attribute entity according to an embodiment of the present disclosure;
Fig. 6 is a schematic flow diagram of the method for intelligent response according to an embodiment of the present disclosure;
Fig. 7 is a schematic flow diagram of intelligent response according to an embodiment of the present disclosure;
Fig. 8 is a structural block diagram of an apparatus for intelligent response according to an embodiment of the present disclosure; and
Fig. 9 is a block diagram of an electronic device adapted to implement the method for intelligent response according to an embodiment of the present disclosure.

### DETAILED DESCRIPTION OF EMBODIMENTS

Example embodiments of the present disclosure are described below in combination with the accompanying drawings, where various details of the embodiments of the present disclosure are included to facilitate understanding and should be considered as examples only. Therefore, those of ordinary skill in the art should realize that various changes and modifications may be made to the embodiments described herein without departing from the scope and spirit of the present disclosure. Similarly, for clarity and conciseness, descriptions of well-know functions and structures are omitted in the following description.

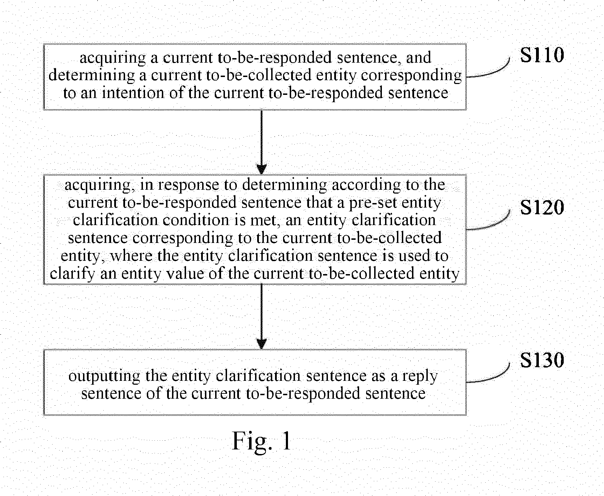

Fig. 1 a schematic flow diagram of a method for intelligent response according to an embodiment of the present disclosure. This embodiment is used in a case of an intelligent dialogue with a client. The method may be executed by an apparatus for intelligent response. The apparatus may be implemented in software and/or hardware, and may be integrated in a computing-capable electronic device. As shown in Fig. 1, the method for intelligent response according to this embodiment may include steps S110 to S130.

S110 includes acquiring a current to-be-responded sentence, and determining a current to-be-collected entity corresponding to an intention of the current to-be-responded sentence.

A sentence input by a user is acquired in real time as the current to-be-responded sentence, and the intention of the current to-be-responded sentence is determined according to an intention recognition method of a natural language. An entity is a general term for a kind of specific subordinate objects. For example, Beijing Daxing Airport and Beijing Capital Airport are collectively referred to as "airport", which is an entity. An entity value is a specific subordinate object corresponding to an entity. For example, the entity value of the "airport" includes Beijing Daxing Airport and Beijing Capital Airport. The current to-be-collected entity in the current to-be-responded sentence is determined according to the intention of the current to-be-responded sentence, where the current to-be-collected entity refers to one to-be-collected entity among all to-be-collected entities preset for the intention of the current to-be-responded sentence. For example, the current to-be-responded sentence is "buy a ticket from city A to city B". According to an intention recognition, the to-be-collected entities involved in the current to-be-responded sentence include "departure airport" and "destination airport", and entity values corresponding to the "departure airport" and the "destination airport" may be pre-stored, including subordinate objects, such as "first international airport of city A", "second international airport of city A", "first international airport of city B", "second international airport of city B" and "first international airport of city C". In this embodiment, no specific limitation on the intention recognition method of the natural language is imposed herein.

S120 includes acquiring, in response to determining that a pre-set entity clarification condition is met according to the current to-be-responded sentence, an entity clarification sentence corresponding to the current to-be-collected entity, where the entity clarification sentence is used to clarify an entity value of the current to-be-collected entity.

The entity clarification condition is a condition for determining a clarification reply to an entity in the current to-be-responded sentence. The entity clarification sentence is a sentence for performing the clarification reply on the current to-be-collected entity in the current to-be-responded sentence, and is used for clarifying an entity value of the current to-be-collected entity in the current to-be-responded sentence, and the entity value is a specific subordinate object of the current to-be-collected entity. Specifically, the entity clarification condition may be pre-set as that the current to-be-responded sentence is a question sentence, and if the current to-be-responded sentence is a question sentence, the pre-set entity clarification condition is met, and the entity clarification sentence is acquired. For example, if a current to-be-responded sentence is "what is the remaining call charges this month", a current to-be-collected entity of the current to-be-responded sentence is "month", and for the current to-be-collected entity, an entity clarification sentence "are you referring to the remaining call charges in April?" may be acquired, where "April" is the entity value of the current to-be-collected entity "month".

The number of the entity value corresponding to the current to-be-collected entity may be determined first. If the number of the entity value corresponding to the current to-be-collected entity is greater than one, the pre-set entity clarification condition is met, and the entity clarification sentence corresponding to the current to-be-collected entity needs to be acquired. For example, in the scenario where users handle data packages in the operator industry: a user wants to handle a data package; a set of candidate values of the entity value of the data package constructed by the system is "20 yuan daily package", "20 yuan monthly package", "30 yuan monthly package" and "10 yuan idle time package"; when the user expresses "I want to have the 20 yuan", the NLU (natural language understanding) cannot determine the unique entity value according to the current to-be-responded sentence expressed by the user; and thus the pre-set clarification condition is met, and the recognized "20 yuan daily package" and "20 yuan monthly package" are returned to the dialogue system, and the generated clarification reply may be "would you like the "20 yuan daily package" or the "20 yuan monthly package"?".

S130 includes outputting the entity clarification sentence as a reply sentence of the current to-be-responded sentence.

The entity clarification sentence is acquired, and the entity clarification sentence is sent to the user as the reply sentence of the current to-be-responded sentence, so that a round of dialogue between the current to-be-responded sentence and the entity clarification sentence is formed, and the dialogue may be displayed on a visual interface, waiting for the user to reply to the entity clarification sentence.

An embodiment of the present disclosure has the following advantages or beneficial effects. By determining the current to-be-collected entity in the current to-be-responded sentence and performing the clarification reply on the entity value of the current to-be-collected entity, the determination and intelligent response of the user request is realized. The problem of the single dialogue capability of intelligent response in the existing technology is solved, and the inconsistency between the reply sentence and the request expressed by the user is avoided, and the correct understanding of the user expression is realized, and the efficiency and accuracy of intelligent response are improved. By supporting the free expressions of the user and improving the intelligence and fluency of the dialogue capability, the service efficiency of the user handling the service is improved, and the user experience is improved.

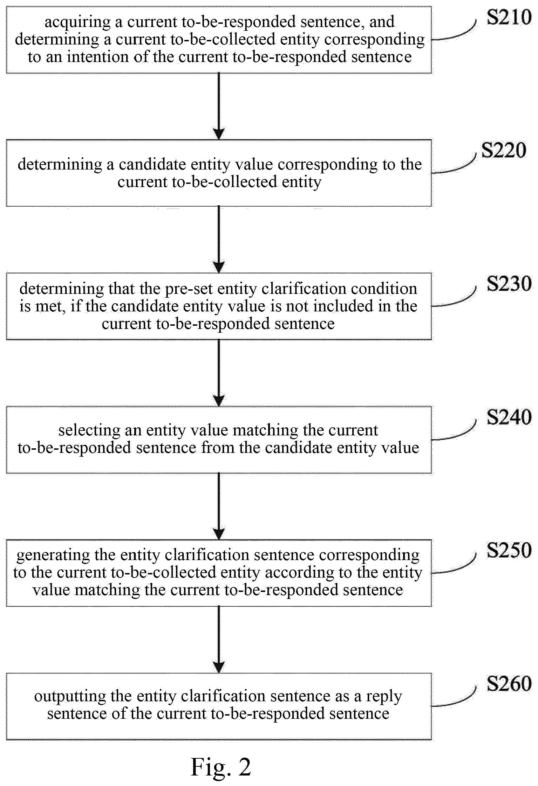

Fig. 2 a schematic flow diagram of the method for intelligent response according to an embodiment of the present disclosure. This embodiment is optimized on the basis of the previous embodiment, and is used in a case of an intelligent dialogue with a client. The method may be executed by an apparatus for intelligent response. The apparatus may be implemented in software and/or hardware, and may be integrated in an electronic device.

In this embodiment, alternatively, the acquiring, in response to determining that the pre-set entity clarification condition is met according to the current to-be-responded sentence, the entity clarification sentence corresponding to the current to-be-collected entity, includes: determining a candidate entity value corresponding to the current to-be-collected entity; determining, if the candidate entity value is not included in the current to-be-responded sentence, that the pre-set entity clarification condition is met; selecting an entity value matching the current to-be-responded sentence from the candidate entity value; and generating the entity clarification sentence corresponding to the current to-be-collected entity according to the entity value matching the current to-be-responded sentence.

As shown in Fig. 2, the method for intelligent response according to this embodiment may include steps S210 to S260.

S210 includes acquiring a current to-be-responded sentence, and determining a current to-be-collected entity corresponding to an intention of the current to-be-responded sentence.

S220 includes determining a candidate entity value corresponding to the current to-be-collected entity.

The candidate entity value is a subordinate object of the current to-be-collected entity. For example, the current to-be-collected entity is "departure airport", and the candidate entity value may be "first international airport of city A", "second international airport of city A", "first international airport of city B", "second international airport of city B" or the like. After acquiring the current to-be-collected entity in the current to-be-responded sentence, the candidate entity value corresponding to the current to-be-collected entity is determined according to a pre-set mapping relationship between the current to-be-collected entity and the candidate entity value.

In this embodiment, alternatively, the determining the candidate entity value corresponding to the current to-be-collected entity, includes: determining a set of entity values corresponding to the to-be-collected entity according to a pre-configured corresponding relationship between entities and sets of entity values; and using the entity values in the set of the entity values as candidate entity values corresponding to the current to-be-collected entity.

Specifically, the set of the entity values includes all candidate entity values of the current to-be-collected entity, and sets of entity values corresponding to different entities are pre-configured. After determining the current to-be-collected entity in the current to-be-responded sentence, the set of the entity values corresponding to the current to-be-collected entity is searched, and each entity value in the set of the entity values is a candidate entity value corresponding to the current to-be-collected entity. For example, if a set of entity values corresponding to an entity "departure airport" is pre-set as: airport =[first international airport of city A, second international airport of city A, first international airport of city B, second international airport of city B], and the "first international airport of city A", the "second international airport of city A", the "first international airport of city B" and the "second international airport of city B" are the candidate values of the "airport". By pre-configuring the corresponding relationship between entities and sets of entity values, the candidate entity values corresponding to the current to-be-collected entity may be searched from the set of the entity values, so that the search efficiency and search accuracy of the candidate entity values are improved, and the reply efficiency and reply accuracy of the current to-be-responded sentence are further improved.

In this embodiment, alternatively, the determining the candidate entity value corresponding to the current to-be-collected entity, includes: acquiring, for a previous to-be-responded sentence, a selected entity value matching the previous to-be-responded sentence; and determining the acquired entity value as the candidate entity value corresponding to the current to-be-collected entity.

Specifically, for the previous to-be-responded sentence, the matching entity value has been selected. For the current to-be-responded sentence, if the current to-be-collected entity is consistent with a previous to-be-collected entity of the previous to-be-responded sentence, the entity value of the previous to-be-responded sentence may be directly acquired as the candidate entity value of the current to-be-collected entity in the current to-be-responded sentence. For example, the previous to-be-responded sentence is "buy a ticket from city A to city B", and for this to-be-responded sentence, an entity clarification sentence" do you need a ticket from the first international airport of city A or the second international airport of city A?" is replied. If the departure airport is still not determined according to a reply sentence of the user for the entity clarification sentence, the "first international airport of city A" and the "second international airport of city A" may be directly used as the candidate entity values. By acquiring the entity value matching the previous to-be-responded sentence, the process of determining the candidate entity values of the current to-be-responded sentence is reduced, and the efficiency of determining the candidate entity values is improved, and the clarification reply time is saved, and the efficiency of the clarification reply is further improved.

S230 includes determining, if the candidate entity value is not included in the current to-be-responded sentence, that the pre-set entity clarification condition is met.

After determining the candidate entity value, the current to-be-responded sentence is searched for the candidate entity value to determine whether the current to-be-responded sentence includes the candidate entity value. If the current to-be-responded sentence includes any candidate entity value, the current to-be-responded sentence does not meet a pre-set entity clarification condition and does not need to be clarified and replied to the current to-be-responded sentence; and if the current to-be-responded sentence does not include any candidate entity value, the current to-be-responded sentence meets the pre-set entity clarification condition, and an entity clarification sentence for the candidate entity value needs to be generated to reply. For example, a current to-be-responded sentence is "buy a ticket from city A to city B", and for a current to-be-collected entity "departure airport", candidate entity values are "first international airport of city A", "second international airport of city A", "first international airport of city B" and "second international airport of city B". The current to-be-responded sentence does not include any candidate entity value. Therefore, the current to-be-responded sentence meets the pre-set entity clarification condition.

S240 includes selecting an entity value matching the current to-be-responded sentence from the candidate entity value.

The current to-be-collected entity of the current to-be-responded sentence may correspond to at least one candidate entity value, and the entity value satisfying the matching relationship with the current to-be-responded sentence is selected according to the matching relationship between the candidate entity value and the current to-be-responded sentence. Specifically, the number of a same word between the candidate entity value and the current to-be-responded sentence may be used as a judgment criterion of the matching relationship. For example, a current to-be-responded sentence is "what is the airport floor plan of the city A", and a current to-be-collected entity is "airport", and candidate entity values are "first international airport of city A", "second international airport of city A", "first international airport of city B", "second international airport of city B" and "first international airport of city C", where the "first international airport of city A" and the "second international airport of city A" are candidate entity values with the greatest number of a same word as in the current to-be-responded sentence. Therefore, the "first international airport of city A" and the "second international airport of city A" are determined as entity values matching the current to-be-responded sentence.

S250 includes generating the entity clarification sentence corresponding to the current to-be-collected entity according to the entity value matching the current to-be-responded sentence.

After determining the entity value matching the current to-be-responded sentence, the entity clarification sentence is generated for the determined one or more entity values, and all the entity values matching the current to-be-responded sentence may be displayed in the entity clarification sentence to facilitate selection and confirmation of the user. For example, if a current to-be-responded sentence is "what is the airport floor plan of the city A", and the determined entity values are "first international airport of city A" and "second international airport of city A", and the entity clarification sentence may be "is it the first international airport of city A or the second international airport of city A?".

S260 includes outputting the entity clarification sentence as a reply sentence of the current to-be-responded sentence.

An embodiment of the present disclosure has the following advantages or beneficial effects. The current to-be-collected entity is determined according to the intention of the current to-be-responded sentence, and the candidate entity value is determined by the current to-be-collected entity, and when the current to-be-responded sentence meets the pre-set entity clarification condition, the entity clarification sentence is generated for the matching entity value to facilitate the confirmation of the user. The problem of the single dialogue capability of intelligent response in the existing technology is solved, and the inconsistency between the reply sentence and the request expressed by the user is avoided. By selecting the matching candidate entity value, the correct understanding of the user expression is realized, and the time for the clarification reply is saved, and the efficiency and accuracy of intelligent response are improved, and the user experience is improved.

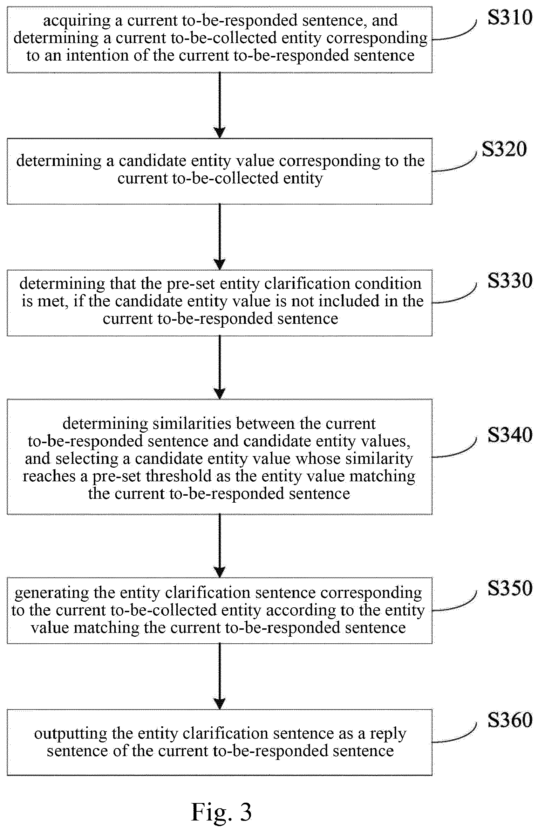

Fig. 3 is a schematic flow diagram of the method for intelligent response according to an embodiment of the present disclosure. This embodiment is optimized on the basis of the previous embodiments, and is used in a case of an intelligent dialogue with a client. The method may be executed by an apparatus for intelligent response. The apparatus may be implemented in software and/or hardware, and may be integrated in an electronic device.

In this embodiment, alternatively, the selecting the entity value matching the current to-be-responded sentence from the candidate entity value, includes: determining similarities between the current to-be-responded sentence and candidate entity values; and selecting a candidate entity value whose similarity reaches a pre-set threshold as the entity value matching the current to-be-responded sentence.

As shown in Fig. 3, the method for intelligent response according to this embodiment may include steps S310 to S360.

S310 includes acquiring a current to-be-responded sentence, and determining a current to-be-collected entity corresponding to an intention of the current to-be-responded sentence.

S320 includes determining a candidate entity value corresponding to the current to-be-collected entity.

S330 includes determining, if the candidate entity value is not included in the current to-be-responded sentence, that the pre-set entity clarification condition is met.

S340 includes determining similarities between the current to-be-responded sentence and candidate entity values; and selecting a candidate entity value whose similarity reaches a pre-set threshold as the entity value matching the current to-be-responded sentence.

After obtaining the candidate entity values, the entity value matching the current to-be-responded sentence is selected from the candidate entity values. If a candidate entity value meets a pre-set matching condition, an entity clarification sentence is generated according to the candidate entity value. The pre-set matching condition may be a similarity between the current to-be-responded sentence and each candidate entity value. If a similarity between the current to-be-responded sentence and a candidate entity value reaches a pre-set similarity threshold, the candidate entity value is an entity value matching the current to-be-responded sentence. For example, the similarity may be the number of a same word between a candidate entity value and the current to-be-responded sentence, and the pre-set similarity threshold is three words. If a current to-be-responded sentence is "what is the airport floor plan of the city A", the candidate entity values are "first international airport of city A", "second international airport of city A" and "first international airport of city B". The number of same words between the "first international airport of city A" and the current to-be-responded sentence is four, and the number of same words between the "second international airport of city A" and the current to-be-responded sentence is four, and the number of same words between the "first international airport of city B" and the current to-be-responded sentence is two, and thus candidate values meeting the similarity condition are the "first international airport of city A" and the "second international airport of city A".

In this embodiment, alternatively, the determining similarities between the current to-be-responded sentence and candidate entity values, includes: performing word segmentation on the current to-be-responded sentence and the candidate entity values; and determining, for the candidate entity values, a number of a same word between the current to-be-responded sentence and a current candidate entity value according to a result of the word segmentation, and determining a similarity between the current to-be-responded sentence and the current candidate entity value according to the number.

Specifically, the method for determining the similarity between the current to-be-responded sentence and each candidate entity value may determine the number of the same word between the current to-be-responded sentence and each candidate entity value. The word segmentation is performed on the current to-be-responded sentence and each candidate entity value. The obtained result of the word segmentation may be a word segmentation set of the current to-be-responded sentence and a word segmentation set of each candidate entity value. Comparing the result of the word segmentation of each candidate entity value with the result of word segmentation of the current to-be-responded sentence respectively, the number of a same word between each candidate entity value and the current to-be-responded sentence is determined. The similarity between the current to-be-responded sentence and each candidate entity value is determined according to the number of a same word. The more the number of a same word, the higher the similarity. By performing word segmentation on the current to-be-responded sentence and each candidate entity value to determine the similarity, the calculation efficiency and calculation accuracy of the similarity may be improved, and the judgment errors of the candidate entity values may be avoided, and the accurate reply of the entity clarification sentence to the current to-be-responded sentence may be realized.

S350 includes generating the entity clarification sentence corresponding to the current to-be-collected entity according to the entity value matching the current to-be-responded sentence.

S360 includes outputting the entity clarification sentence as a reply sentence of the current to-be-responded sentence.

An embodiment of the present disclosure has the following advantages or beneficial effects. The current to-be-collected entity is determined according to the intention of the current to-be-responded sentence, and the candidate entity value is determined by the current to-be-collected entity, and when the current to-be-responded sentence meets the pre-set entity clarification condition, the matching entity value is determined according to the similarity, and the entity clarification sentence is generated for the matching entity value to facilitate the confirmation of the user. The problem of the single dialogue capability of intelligent response in the existing technology is solved, and the inconsistency between the reply sentence and the request expressed by the user is avoided. By selecting the matching entity value according to the similarity, the correct clarification reply of the user expression is realized, and the efficiency and accuracy of intelligent response are improved, and the user experience is improved.

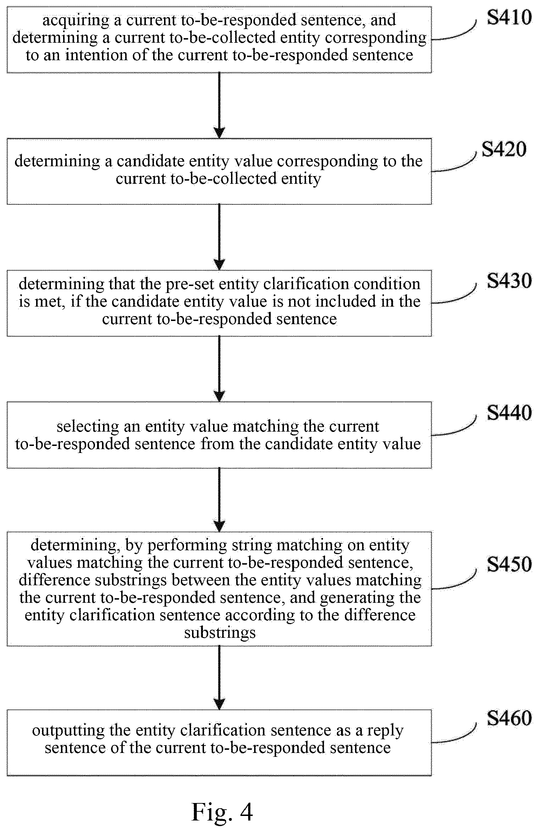

Fig. 4 is a schematic flow diagram of the method for intelligent response according to an embodiment of the present disclosure. This embodiment is optimized on the basis of the previous embodiments, and is used in a case of an intelligent dialogue with a client. The method may be executed by an apparatus for intelligent response. The apparatus may be implemented in software and/or hardware, and may be integrated in an electronic device.

In this embodiment, alternatively, the generating the entity clarification sentence corresponding to the current to-be-collected entity according to the entity value matching the current to-be-responded sentence, includes: determining, by performing character string matching on entity values matching the current to-be-responded sentence, difference substrings between the entity values matching the current to-be-responded sentence, and generating the entity clarification sentence according to the difference substrings.

As shown in Fig. 4, the method for intelligent response according to this embodiment may include steps S410 to S460.

S410 includes acquiring a current to-be-responded sentence, and determining a current to-be-collected entity corresponding to an intention of the current to-be-responded sentence.

S420 includes determining a candidate entity value corresponding to the current to-be-collected entity.

S430 includes determining, if the candidate entity value is not included in the current to-be-responded sentence, that the pre-set entity clarification condition is met.

S440 includes selecting an entity value matching the current to-be-responded sentence from the candidate entity value.

S450 includes determining, by performing character string matching on entity values matching the current to-be-responded sentence, a difference substring between the entity values matching the current to-be-responded sentence, and generating the entity clarification sentence according to the difference substring.

The difference substring refers to a character string composed of different characters between the entity values matching the current to-be-responded sentence. When generating the entity clarification sentence according to the entity values, the character string matching is performed on each entity value matching the current to-be-responded sentence, and the different characters between the entity values are determined as a difference substring. The entity clarification sentence is generated according to the difference substring, and the difference substring of each entity value matching the current to-be-responded sentence is displayed in the entity clarification sentence, so that a user may determine an appropriate entity value through the difference substring. For example, entity values matching the current to-be-responded sentence are "first international airport of city A" and "second international airport of city A", and the difference between the two entity values is "first" and "second", and thus a difference substring [first, second] may be generated. According to the difference substring, the generated entity clarification sentence may be "are you referring to the first airport or the second airport?".

In this embodiment, alternatively, the current to-be-collected entity includes multiple attribute entities with a hierarchical relationship; and the generating the entity clarification reply sentence according to the difference substring, includes: determining attribute entities corresponding to the difference substring, respectively; and generating, for the determined attribute entities successively, according to the hierarchical relationship and the difference substring corresponding to the attribute entities, an entity clarification sentence of a corresponding attribute entity.

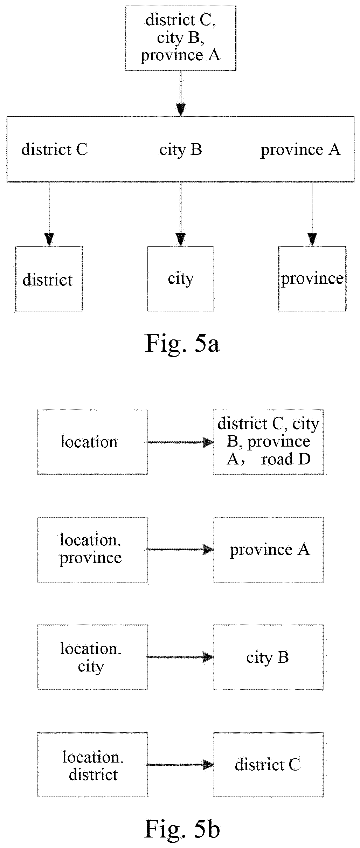

Specifically, the current to-be-collected entity may be an attribute entity with the hierarchical relationship, for example, may be an entity including hierarchical attributes, such as a location, and the location attribute may include a province, a city, a district and the like. Figs. 5a and 5b are schematic diagrams of a multi-hierarchy location attribute entity. If the current to-be-collected entity is an attribute entity with the hierarchical relationship, according to the hierarchical relationship from a superordinate hierarchy to a subordinate hierarchy, a difference substring of entity values matching the current to-be-responded sentence is determined, and for the difference substring of the hierarchical relationship, an entity clarification sentence of the corresponding attribute entity is generated. For example, a current to-be-responded sentence of a user includes "Changjiang Road", and entity values corresponding to the "Changjiang Road" include "Changjiang Road in district C of city A" and "Changjiang Road in district D of city B", where the "city A" and the "city B" are attribute entities of the same hierarchy, i.e., "city"; and the "district C" and the "district D" are attribute entities of the same hierarchy, i.e., "district". The hierarchy of the attribute entities "city A" and "city B" is higher than the hierarchy of the attribute entities "district C" and "district D", and thus a difference string of the two attribute entities "city A" and "city B" is generated in priority, and a generated entity clarification sentence may be "are you referring to the Changjiang Road of city A or the Changjiang Road of city B?". A difference string of the two attribute entities "district C" and "district D" is then generated, and a generated entity clarification sentence may be "are you referring to the Changjiang Road in district C or the Changjiang Road in district D?". By generating the difference sub-strings with the different hierarchies, the current to-be-responded sentence is determined hierarchy by hierarchy, which is beneficial to improving the correct understanding of the current to-be-responded sentence, improving the reply efficiency and reply accuracy of the entity clarification sentence, and improving the user experience.

S460 includes outputting the entity clarification sentence as a reply sentence of the current to-be-responded sentence.

An embodiment of the present disclosure has the following advantages or beneficial effects. The current to-be-collected entity is determined according to the intention of the current to-be-responded sentence, and the candidate entity value is determined by the current to-be-collected entity, and when the current to-be-responded sentence meets the pre-set entity clarification condition, the difference substring is generated for the matching entity value, and the entity clarification sentence is determined according to the difference substring to facilitate the confirmation of the user. The problem of the single dialogue capability of intelligent response in the existing technology is solved, and the inconsistency between the reply sentence and the request expressed by the user is avoided. The entity clarification sentence is generated through the difference substring, which facilitates the user to select the appropriate entity value. The entity clarification sentence is replied according to a standard format, and the efficiency and accuracy of intelligent response are improved, and the user experience is improved.

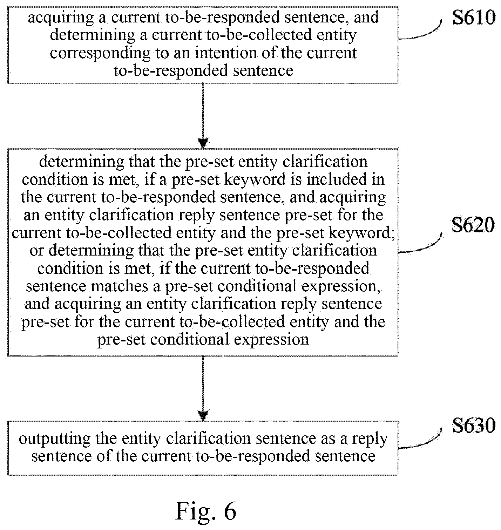

Fig. 6 is a schematic flow diagram of the method for intelligent response according to an embodiment of the present disclosure. This embodiment is optimized on the basis of the previous embodiments, and is used in a case of an intelligent dialogue with a client. The method may be executed by an apparatus for intelligent response. The apparatus may be implemented in software and/or hardware, and may be integrated in an electronic device.

In this embodiment, alternatively, the acquiring, in response to determining that a pre-set entity clarification condition is met according to the current to-be-responded sentence, an entity clarification sentence corresponding to the current to-be-collected entity, includes: determining, if a pre-set keyword is included in the current to-be-responded sentence, that the pre-set entity clarification condition is met, and acquiring an entity clarification reply sentence pre-set for the current to-be-collected entity and the pre-set keyword; or determining, if the current to-be-responded sentence matches a pre-set conditional expression, that the pre-set entity clarification condition is met, and acquiring an entity clarification reply sentence pre-set for the current to-be-collected entity and the pre-set conditional expression.

As shown in Fig. 6, the method for intelligent response according to this embodiment may include steps S610 to S630.

S610 includes acquiring a current to-be-responded sentence, and determining a current to-be-collected entity corresponding to an intention of the current to-be-responded sentence.

S620 includes determining, if a pre-set keyword is included in the current to-be-responded sentence, that the pre-set entity clarification condition is met, and acquiring an entity clarification reply sentence pre-set for the current to-be-collected entity and the pre-set keyword; or determining, if the current to-be-responded sentence matches a pre-set conditional expression, that the pre-set entity clarification condition is met, and acquiring an entity clarification reply sentence pre-set for the current to-be-collected entity and the pre-set conditional expression.

The determining that the to-be-responded determines that the pre-set entity clarification condition is met may be determining whether the pre-set keyword is included in the current to-be-responded sentence. If the keyword is not included, the pre-set entity clarification condition is not met; and if the keyword is included, the pre-set entity clarification condition is met, and the entity clarification reply needs to be performed. For example, a pre-set keyword may be "change a password", and when it is recognized that the "change a password" is included in the current to-be-responded sentence, the entity clarification reply sentence pre-set for the current to-be-collected entity and the pre-set keyword is acquired, and the to-be-responded sentence is replied. The entity clarification reply sentence may be pre-set, for example, a to-be-responded sentence sent by a user is "I want to change a password", and a pre-set keyword is "change a password", and a current to-be-collected entity is "password", and candidate entity values include "service password" and "login password", and thus, an entity clarification sentence may be set for the current to-be-collected entity and the pre-set keyword as "do you want to change the service password or the login password?".

The determining that the to-be-responded determines that the pre-set entity clarification condition is met may be alternatively determining whether the current to-be-responded sentence matches the pre-set conditional expression. If the current to-be-responded sentence does not match the pre-set conditional expression, the pre-set entity clarification condition is not met; and if the current to-be-responded sentence matches the pre-set conditional expression, the pre-set entity clarification condition is met, and the entity clarification reply sentence pre-set for the current to-be-collected entity and the pre-set conditional expression is acquired, and the entity clarification reply needs to be performed. For example, a pre-set conditional expression may be "A or B", and when a current to-be-responded sentence is in the expression form of "A or B", the pre-set entity clarification condition is met, and a reply according to the entity clarification reply sentence under the pre-set conditional expression is performed.

S630 includes outputting the entity clarification sentence as a reply sentence of the current to-be-responded sentence.

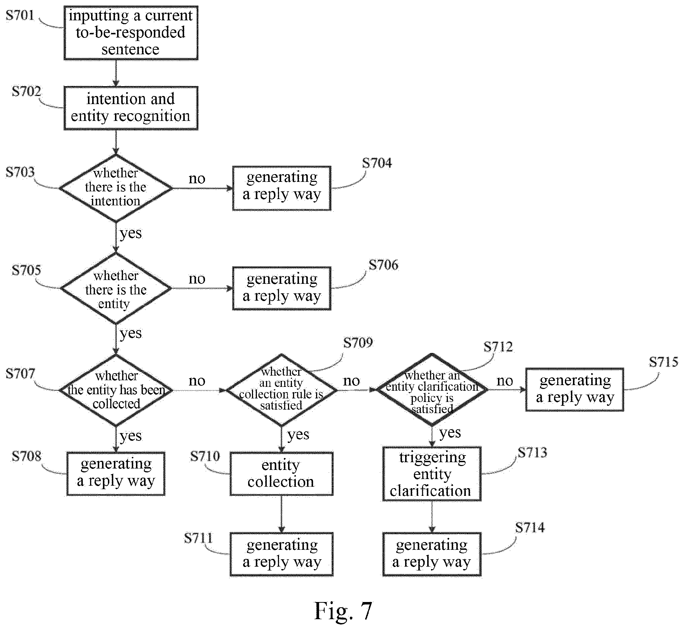

Fig. 7 is a schematic flow diagram of intelligent response.

S701 includes a user inputting a current to-be-responded sentence.

S702 includes recognizing an intention of the current to-be-responded sentence and a current to-be-collected entity.

S703 includes determining whether the user expresses the intention. If the intention is not expressed, S704 is performed; or if the intention is expressed, S705 is performed.

S704 includes executing a reply way to guide the user to express the intention.

S705 includes determining whether the user expresses an entity. If the entity is not expressed, S706 is performed; or if the entity is expressed, S707 is performed.

S706 includes executing a reply way to guide the user to express a to-be-collected entity in a current scenario.

S707 includes determining whether the entity is collected. If the entity is collected, S708 is performed; or if the entity is not collected, S709 is performed.

S708 includes executing a reply way according to current dialog information.

S709 includes determining whether an entity collection rule is met, where the entity collection rule is a preset definition of an entity collection expression. If the entity collection rule is met, S710 is performed; or if an entity collection rule is not met, S712 is performed.

S710 includes performing entity collection.

S711 includes executing a reply way, same as S709.

S712 includes determining whether the current to-be-collected entity meets an entity clarification policy. If the current to-be-collected entity meets the entity clarification policy, S713 is performed; or if the current to-be-collected entity does not meet the entity clarification policy, S715 is performed.

S713 includes triggering entity clarification to obtain an entity clarification reply sentence.

S714 includes executing a reply way according to the entity clarification reply sentence. S712 to S714 may refer to the contents of the previous embodiments, and details are not described herein.

S715 includes executing a reply way according to a system state.

An embodiment of the present disclosure has the following advantages or beneficial effects. By determining that the current to-be-responded sentence meets the pre-set entity clarification condition, the clarification reply is performed on an entity value of the current to-be-collected entity, and the determination and intelligent response of the user request is realized. The problem of the single dialogue capability of intelligent response in the existing technology is solved, and the inconsistency between the reply sentence and the request expressed by the user is avoided, and the correct understanding of the user expression is realized. By serving a customized scenario of a customer, a real demand of the customer is accurately hit, and the efficiency and accuracy of intelligent response are improved, and the user experience is improved.

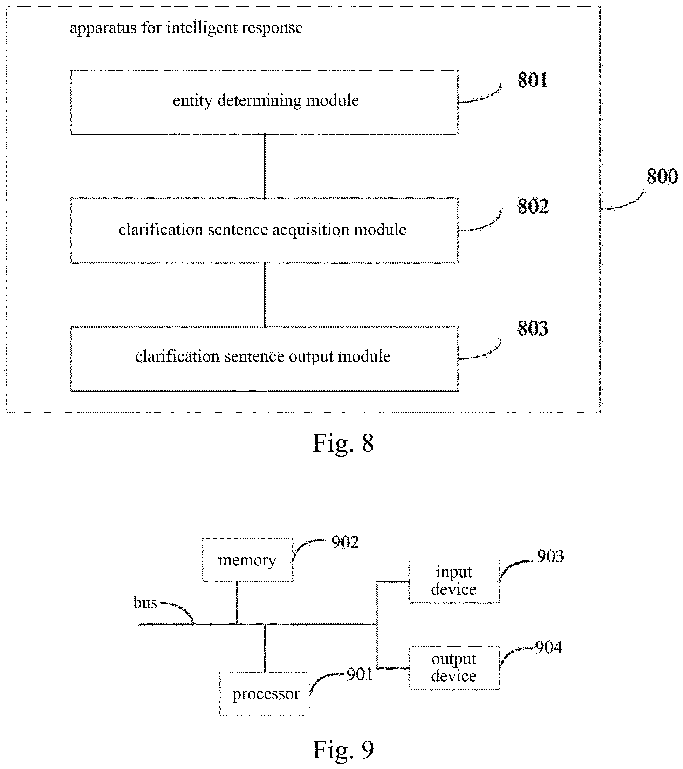

Fig. 8 is a structural block diagram of an apparatus for intelligent response according to an embodiment of the present disclosure. The apparatus may execute the method for intelligent response according to an embodiment of the present disclosure, and has corresponding functional modules and beneficial effects of the executed method. As shown in Fig. 8, the apparatus 800 may include:
an entity determining module 801, configured to acquire a current to-be-responded sentence, and determine a current to-be-collected entity corresponding to an intention of the current to-be-responded sentence;
a clarification sentence acquisition module 802, configured to acquire, in response to determining that a pre-set entity clarification condition is met according to the current to-be-responded sentence, an entity clarification sentence corresponding to the current to-be-collected entity, where the entity clarification sentence is used to clarify an entity value of the current to-be-collected entity; and
a clarification sentence output module 803, configured to output the entity clarification sentence as a reply sentence of the current to-be-responded sentence.

Alternatively, the clarification sentence acquisition module 802 includes:
a candidate entity value determining unit, configured to determine a candidate entity value corresponding to the current to-be-collected entity;
a clarification condition determining unit, configured to determine, if the candidate entity value is not included in the current to-be-responded sentence, that the pre-set entity clarification condition is met;
an entity value selection unit, configured to select an entity value matching the current to-be-responded sentence from the candidate entity value; and
a clarification sentence generation unit, configured to generate the entity clarification sentence corresponding to the current to-be-collected entity according to the entity value matching the current to-be-responded sentence.

Alternatively, the candidate entity value determining unit includes:
an entity value set determining unit, configured to determine a set of entity values corresponding to the to-be-collected entity according to a pre-configured corresponding relationship between entities and sets of entity values; and
a candidate entity value obtaining unit, configured to use the entity values in the set of the entity values as candidate entity values corresponding to the current to-be-collected entity.

Alternatively, the candidate entity value determining unit includes:
an entity value acquisition unit, configured to acquire, for a previous to-be-responded sentence, a selected entity value matching the previous to-be-responded sentence; and
a candidate entity value acquisition unit, configured to determine the acquired entity value as the candidate entity value corresponding to the current to-be-collected entity.

Alternatively, the entity value selection unit includes:
a similarity determining unit, configured to determine similarities between the current to-be-responded sentence and candidate entity values; and
an entity value determining unit, configured to select a candidate entity value whose similarity reaches a pre-set threshold as the entity value matching the current to-be-responded sentence.

Alternatively, the similarity determining unit includes:
a word segmentation unit, configured to perform word segmentation on the current to-be-responded sentence and the candidate entity values; and
a word number determining unit, configured to determine, for the candidate entity values, a number of a same word between the current to-be-responded sentence and a current candidate entity value according to a result of the word segmentation, and determine a similarity between the current to-be-responded sentence and the current candidate entity value according to the number.

Alternatively, the clarification sentence generation unit includes:
a difference substring determining unit, configured to determine, by performing character string matching on entity values matching the current to-be-responded sentence, a difference substring between the entity values matching the current to-be-responded sentence, and generate the entity clarification sentence according to the difference substring.

Alternatively, the current to-be-collected entity includes multiple attribute entities with a hierarchical relationship; and
the difference substring determining unit further includes:
an attribute entity determining unit, configured to determine attribute entities corresponding to the difference substring, respectively; and
a sentence generation unit, configured to generate, for the determined attribute entities successively, according to the hierarchical relationship and the difference substring corresponding to the attribute entities, an entity clarification sentence of a corresponding attribute entity.

Alternatively, the clarification sentence acquisition module 802 is further configured to:
determine, if a pre-set keyword is included in the current to-be-responded sentence, that the pre-set entity clarification condition is met, and acquire an entity clarification reply sentence pre-set for the current to-be-collected entity and the pre-set keyword; or
determine, if the current to-be-responded sentence matches a pre-set conditional expression, that the pre-set entity clarification condition is met, and acquire an entity clarification reply sentence pre-set for the current to-be-collected entity and the pre-set conditional expression.

An embodiment of the present disclosure has the following advantages or beneficial effects. By determining the to-be-collected entity in the current to-be-responded sentence, the clarification reply is performed on the entity value of the current to-be-collected entity, and the determination and intelligent response of the user request is realized. The problem of the single dialogue capability of intelligent response in the existing technology is solved, and the inconsistency between the reply sentence and the request expressed by the user is avoided, and the correct understanding of the user expression is realized, and the efficiency and accuracy of intelligent response are improved. By supporting the free expressions of the user and improving the intelligence and fluency of the dialogue capability, the service efficiency of the user handling the service is improved, and the user experience is improved.

According to an embodiment of the present disclosure, the present disclosure further provides an electronic and a readable storage medium.

Fig. 9 is a block diagram of an electronic device adapted to implement the method for intelligent response according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 9, the electronic device includes one or more processors 901, a memory 902 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 901 is shown in Fig. 9.

The memory 902 is a non-transitory computer readable storage medium according to the present disclosure. The memory stores instructions executable by at least one processor to cause the at least one processor to execute the method for intelligent response according to the present disclosure. The non-transitory computer readable storage medium of the present disclosure stores computer instructions for causing a computer to execute the method for intelligent response according to the present disclosure.

As a non-transitory computer readable storage medium, the memory 902 may be used to store non-transitory software programs, non-transitory computer executable programs and modules, such as the program instructions or modules corresponding to the method for intelligent response in the embodiment of the present disclosure. The processor 901 runs the non-transitory software programs, instructions and modules stored in the memory 902 to execute various functional applications and data processing of the server, thereby implementing the method for intelligent response in the embodiment of the method.

The memory 902 may include a storage program area and a storage data area, where the storage program area may store an operating system and an application program required by at least one function; and the storage data area may store data created by the electronic device when executing the method for intelligent response. In addition, the memory 902 may include a high-speed random access memory, and may further include a non-transitory memory, such as at least one magnetic disk storage device, a flash memory or other non-transitory solid state storage devices. In some embodiments, the memory 902 may alternatively include a memory disposed remotely relative to the processor 901, which may be connected through a network to the electronic device adapted to execute the method for intelligent response. Examples of such networks include, but are not limited to, the Internet, enterprise intranets, local area networks, mobile communication networks and combinations thereof.

The electronic device adapted to execute the method for intelligent response may further include an input device 903 and an output device 904. The processor 901, the memory 902, the input device 903 and the output device 904 may be interconnected through a bus or other means, and an example of a connection through a bus is shown in Fig. 9.

The input device 903 may receive input digit or character information, and generate key signal input related to user settings and functional control of the electronic device adapted to execute the method for intelligent response, such as a touch screen, a keypad, a mouse, a track pad, a touch pad, a pointer bar, one or more mouse buttons, a trackball or a joystick. The output device 904 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other.

According to the technical solutions of the present disclosure, by determining the to-be-collected entity in the current to-be-responded sentence, the clarification reply is performed on the entity value of the current to-be-collected entity, and the determination and intelligent response of the user request is realized. The problem of the single dialogue capability of intelligent response in the existing technology is solved, and the inconsistency between the reply sentence and the request expressed by the user is avoided, and the correct understanding of the user expression is realized, and the efficiency and accuracy of intelligent response are improved. By supporting the free expressions of the user and improving the intelligence and fluency of the dialogue capability, the service efficiency of the user handling the service is improved, and the user experience is improved.

It should be appreciated that the steps of reordering, adding or deleting may be executed using the various forms shown above. For example, the steps described in the present disclosure may be executed in parallel or sequentially or in a different order, so long as the expected results of the technical solutions provided in the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for intelligent response, the method comprising:
acquiring (S110) a current to-be-responded sentence, and determining a current to-be-collected entity corresponding to an intention of the current to-be-responded sentence;
acquiring (S120), in response to determining that a pre-set entity clarification condition is met according to the current to-be-responded sentence, an entity clarification sentence corresponding to the current to-be-collected entity, wherein the entity clarification sentence is used to clarify an entity value of the current to-be-collected entity; and
outputting (S130) the entity clarification sentence as a reply sentence of the current to-be-responded sentence.

2. The method according to claim 1, wherein the acquiring, in response to determining that a pre-set entity clarification condition is met according to the current to-be-responded sentence, an entity clarification sentence corresponding to the current to-be-collected entity, comprises:
determining (S220) a candidate entity value corresponding to the current to-be-collected entity;
determining (S230), if the candidate entity value is not comprised in the current to-be-responded sentence, that the pre-set entity clarification condition is met;
selecting (S240) an entity value matching the current to-be-responded sentence from the candidate entity value; and
generating (S250) the entity clarification sentence corresponding to the current to-be-collected entity according to the entity value matching the current to-be-responded sentence.

3. The method according to claim 2, wherein the determining a candidate entity value corresponding to the current to-be-collected entity, comprises:
determining a set of entity values corresponding to the to-be-collected entity according to a pre-configured corresponding relationship between entities and sets of entity values; and
using the entity values in the set of the entity values as candidate entity values corresponding to the current to-be-collected entity.

4. The method according to claim 2, wherein the determining a candidate entity value corresponding to the current to-be-collected entity, comprises:
acquiring, for a previous to-be-responded sentence, a selected entity value matching the previous to-be-responded sentence; and
determining the acquired entity value as the candidate entity value corresponding to the current to-be-collected entity.

5. The method according to any one of claims 2 to 4, wherein the selecting an entity value matching the current to-be-responded sentence from the candidate entity value, comprises:
determining (S340) similarities between the current to-be-responded sentence and candidate entity values; and
selecting (S340) a candidate entity value whose similarity reaches a pre-set threshold as the entity value matching the current to-be-responded sentence.

6. The method according to claim 5, wherein the determining similarities between the current to-be-responded sentence and candidate entity values, comprises:
performing word segmentation on the current to-be-responded sentence and the candidate entity values; and
determining, for the candidate entity values, a number of a same word between the current to-be-responded sentence and a current candidate entity value according to a result of the word segmentation, and determining a similarity between the current to-be-responded sentence and the current candidate entity value according to the number.

7. The method according to any one of claims 2 to 6, wherein the generating the entity clarification sentence corresponding to the current to-be-collected entity according to the entity value matching the current to-be-responded sentence, comprises:
determining (s450), by performing character string matching on entity values matching the current to-be-responded sentence, a difference substring between the entity values matching the current to-be-responded sentence, and generating the entity clarification sentence according to the difference substring.

8. The method according to claim 7, wherein the current to-be-collected entity comprises a plurality of attribute entities with a hierarchical relationship; and
the generating the entity clarification reply sentence according to the difference substring, comprises:
determining attribute entities corresponding to the difference substring, respectively; and
generating, for the determined attribute entities successively, according to the hierarchical relationship and the difference substring corresponding to the attribute entities, an entity clarification sentence of a corresponding attribute entity.

9. The method according to any one of claims 1 to 8, wherein the acquiring, in response to determining that a pre-set entity clarification condition is met according to the current to-be-responded sentence, an entity clarification sentence corresponding to the current to-be-collected entity, comprises:
determining (S620), if a pre-set keyword is comprised in the current to-be-responded sentence, that the pre-set entity clarification condition is met, and acquiring an entity clarification reply sentence pre-set for the current to-be-collected entity and the pre-set keyword; or
determining (S620), if the current to-be-responded sentence matches a pre-set conditional expression, that the pre-set entity clarification condition is met, and acquiring an entity clarification reply sentence pre-set for the current to-be-collected entity and the pre-set conditional expression.

10. An apparatus for intelligent response, the apparatus comprising: units for performing the method according to any one of claims 1 to 9.

11. An electronic device, comprising:
at least one processor; and
a memory in communication with the at least one processor, wherein the memory stores instructions executable by the at least one processor, the instructions, when executed by the at least one processor, cause the at least one processor to execute the method for intelligent response according to any one of claims 1 to 9.

12. A non-transitory computer readable storage medium storing computer instructions, wherein the computer instructions cause a computer to execute the method for intelligent response according to any one of claims 1 to 9.

13. A computer program comprising instructions which, when the program is executed by a computer, cause the computer to perform the method according to any one of claims 1 to 9.
